# EUROPÄISCHE PATENTANMELDUNG

(11) **EP 2 378 137 A1**
(43) Veröffentlichungstag der Anmeldung: **19.10.2011**
(21) Anmeldenummer: 11002568.1
(22) Anmeldetag: 29.03.2011
(51) Int. Cl.: F16B 1/00

(54) **Montageanordnung sowie Verfahren zur Herstellung der justierten Montageanordnung**

(30) Priorität: 15.04.2010 DE 102010015097
(71) Anmelder: Festo AG & Co. KG, 73734 Esslingen (DE)
(72) Erfinder: Maichl, Martin, 73084 Salach (DE); Wirtl, Hannes, 86956 Schongau (DE)
(74) Vertreter: Kocher, Mark Werner

(57) **Zusammenfassung**

Es wird eine Montageanordnung mit wenigstens einem stabförmigen, längenjustierbaren, als Arbeitsglied oder Halteglied ausgebildeten mechanischen Bauteil (41, 42) vorgeschlagen, das von einem als Justierelement ausgebildeten Ringglied (43, 44) umgriffen wird, wobei das Ringglied (43, 44) oder wenigstens ein Bereich des Bauteils (41, 42) aus Memorymetall besteht und entweder das Ringglied (43, 44) auf dem durch Streckung im Durchmesser verringerten Bereich des Bauteils (41, 42) aus Memorymetall verschiebbar ist oder das aus Memorymetall bestehende Ringglied (43, 44) im aufgeweiteten Zustand auf dem Bauteil (41, 42) verschiebbar ist, und wobei das Ringglied (43, 44) auf dem Bauteil (41, 42) durch Erhitzung in der gewünschten Position fixierbar. Weiterhin wird ein Verfahren zur Herstellung einer solchen justierten Montageanordnung vorgeschlagen.

## Beschreibung

Die Erfindung betrifft eine Montageanordnung mit wenigstens einem rohr- oder stabförmigen Element, das von einem Ringglied umgriffen wird, wobei das Ringglied oder wenigstens ein Bereich des rohr- oder stabförmigen Elements aus Memorymetall besteht und entweder das Ringglied auf dem durch Streckung im Durchmesser verringerten Bereich des rohr- oder stabförmigen Elements aus Memorymetall verschiebbar ist oder das aus Memorymetall bestehende Ringglied im aufgeweiteten Zustand auf dem rohr- oder stabförmigen Element verschiebbar ist, und wobei das Ringglied auf dem rohr- oder stabförmigen Element oder dessen Bereich aus Memorymetall durch Erhitzung in der gewünschten Position fixierbar ist. Weiterhin betrifft die Erfindung ein Verfahren zur Herstellung der justierten Montageanordnung.

Eine derartige Montageanordnung in Form einer Rohrverbindung ist aus der DE 299 07 405 U1 bekannt. Ein als Rohrverbindungselement ausgebildetes Ringglied aus Memorymetall wird über die Verbindungsstelle zwischen zwei Metallrohren geschoben und dann erhitzt. Dadurch verringert sich der Durchmesser des Ringglieds wieder auf seinen ursprünglichen Wert vor der Aufweitung, so dass das Ringglied dichtend über der Verbindungsstelle fixiert wird und so die Rohre miteinander verbindet.

Memorymetalle (SMA) haben eine temperaturabhängige Hysterese in ihren mechanischen Eigenschaften. Die Hysteresebreite ist materialabhängig und einstellbar. Die wichtigsten Memorymetalle sind Nickel-Titan-Legierungen, beispielsweise Nitinol. Ein Ringglied oder ein sonstiges Element aus einem Memorymetall wird üblicherweise unter seine spezifische Erweichungstemperatur von z.B. -20° C abgekühlt und im dann erweichten Zustand in der gewünschten Weise verformt, im Falle des Ringglieds wird dieser so aufgedehnt, dass er beispielsweise bei der bekannten Anordnung über die zu verbindenden Rohre geschoben werden kann. Dann wird er über seine sogenannte AF-Temperatur von z.B. 80° C hinaus erhitzt und nimmt dadurch seine ursprüngliche Gestalt vor der Verformung wieder ein, d.h., das bekannte Ringglied schrumpft über die zu verbindende Rohre und behält dann diese Gestalt.

Bei vielen bekannten Montageanordnungen, bzw. Geräten und technischen Einrichtungen werden mechanische Verbindungelemente, Abstandselemente, Stößel und entsprechende Bauteile eingesetzt, deren Länge bei sehr kleinen Toleranzen sehr exakt stimmen muss, um die jeweilige Arbeitsfunktion ausführen zu können. Dies bedingt entweder eine sehr präzise und dadurch teure Fertigung oder das Anbringen zusätzlicher Toleranzausgleichselemente, die wiederum angepasst werden müssen oder es sind aufwendige Justiereinrichtungen erforderlich.

Eine Aufgabe der vorliegenden Erfindung besteht darin, eine Montageanordnung mit wenigstens einem längenjustierbaren mechanischen Bauteil zu schaffen, das schnell und einfach ohne zusätzliche Hilfsmittel exakt justierbar und kostengünstig herstellbar ist, sowie ein Verfahren zur Herstellung der justierten Montageanordnung aufzuzeigen.

Diese Aufgabe wird erfindungsgemäß durch eine Montageanordnung mit den Merkmalen des Anspruchs 1 sowie ein Verfahren mit den Merkmalen des Anspruchs 8 gelöst.

Die Vorteile der erfindungsgemäßen Montageanordnung und des erfindungsgemäßen Verfahrens bestehen insbesondere darin, dass eine exakte Justierung des längenjustierbaren Bauteils in der Montageanordnung ohne Werkzeuge möglich ist. Die Fertigung des längenjustierbaren Bauteils und des Ringglieds als Justierelement kann in einfacher und kostengünstiger Weise ohne Rücksicht auf Toleranzen erfolgen, wobei eines dieser Teile aus Memorymetall besteht. Im in der Montageanordnung eingesetzten Zustand erfolgt die Justierung durch Verschieben des Ringglieds bis in die gewünschte Justierstellung, wobei dann diese als Fixierstellung durch Erhitzen des Ringglieds bzw. des längenjustierbaren Bauteils über die Memory-Temperatur festgehalten wird. Die Verschiebung des Ringglieds bis in die Justierstellung kann dabei in vorteilhafter Weise durch Schwerkraft erfolgen, indem die Montageanordnung zur Justierung so ausgerichtet wird, dass das Ringglied entlang des längenjustierbaren Arbeitsglieds von selbst durch Schwerkraft in die Justierstellung gleitet. Dadurch ist eine exakte Längenjustierung trotz toleranzbehafteter Einzelelemente, nämlich des Bauteils selbst, des Ringglieds oder der umgebenden Bauteile, möglich.

Durch die in den Unteransprüchen aufgeführten Maßnahmen sind vorteilhafte Weiterbildungen und Verbesserungen der im Anspruch 1 angegebenen Montageanordnung und des im Anspruch 8 angegebenen Verfahrens möglich.

Die justierbare Länge kann in vorteilhafter Weise entweder der Abstand zwischen einem Endbereich des Bauteils einerseits und dem benachbarten Endbereich des Ringglieds andererseits oder dem davon entfernten Endbereich des Ringglieds andererseits sein.

Das Ringglied kann je nach Einsatz und Kontaktbereich an der Justierposition eine zylindrische, ellipsoidförmige, teilellipsoidförmige, kugelförmige oder teilkugelförmige Gestalt oder Mischgestalt der vorstehend genannten Alternativen besitzen.

Als besonders vorteilhaft hat sich die Ausbildung der Montageanordnung als fluidisches Ventil erwiesen. Das längenjustiebare Bauteil ist hierbei als Betätigungsglied für ein Ventilglied ausgebildet. Die Ventiljustage kann hierbei im Vergleich zur herkömmlichen Ventiljustage einfacher, schneller, kostengünstiger und präzisier durchgeführt werden. Das als Betätigungsglied ausgebildete Bauteil ist bei dieser Ausbildung zweckmäßigerweise zwischen einem Aktorglied einer elektrischen oder fluidischen Betätigungseinrichtung und dem Ventilglied angeordnet. Hierbei ist die elektrische Betätigungseinrichtung bevorzugt als elektromagnetische Betätigungseinrichtung ausgebildet und das als Betätigungsglied ausgebildete Bauteil ist zwischen einem Anker als Aktorglied der Betätigungseinrichtung und dem Ventilglied angeordnet. Hierbei lässt sich beispielsweise die Ventilgliedposition sehr exakt und in der gewünschten Weise justieren.

In einer zweckmäßigen Ausgestaltung greift das als Betätigungsglied ausgebildete Bauteil nur in einen Teilbereich der Durchgangsausnehmung des Ringglieds ein oder erstreckt sich durch diese hindurch und wenigstens teilweise in eine Ausnehmung des Aktorglieds oder Ventilglieds hinein.

Zwei Ausführungsbeispiele der Erfindung sind in der Zeichnung dargestellt und in der nachfolgenden Beschreibung näher erläutert. Es zeigen:
- Figur 1: eine mehrere übereinander angeordnete Bauteile aufweisende Montageeinrichtung mit einem längenjustierbaren mechanischen Bauteil in Form eines stabförmigen Elements, auf dem ein Ringglied aus Memorymetall als Justierglied im aufgeweiteten Zustand verschiebbar angeordnet ist, als erstes Ausführungsbeispiel der Erfindung,
- Figur 2: dieselbe Anordnung, bei der sich das Ringglied schwerkraftbedingt an das oberste Bauteil angelegt hat,
- Figur 3: dieselbe Anordnung nach der Fixierung des Ringglieds in der erreichten Position durch Erhitzung und
- Figur 4: ein Magnetventil im Längsschnitt mit zwei längenjustierbaren Betätigungsgliedern als zweites Ausführungsbeispiel der Erfindung.

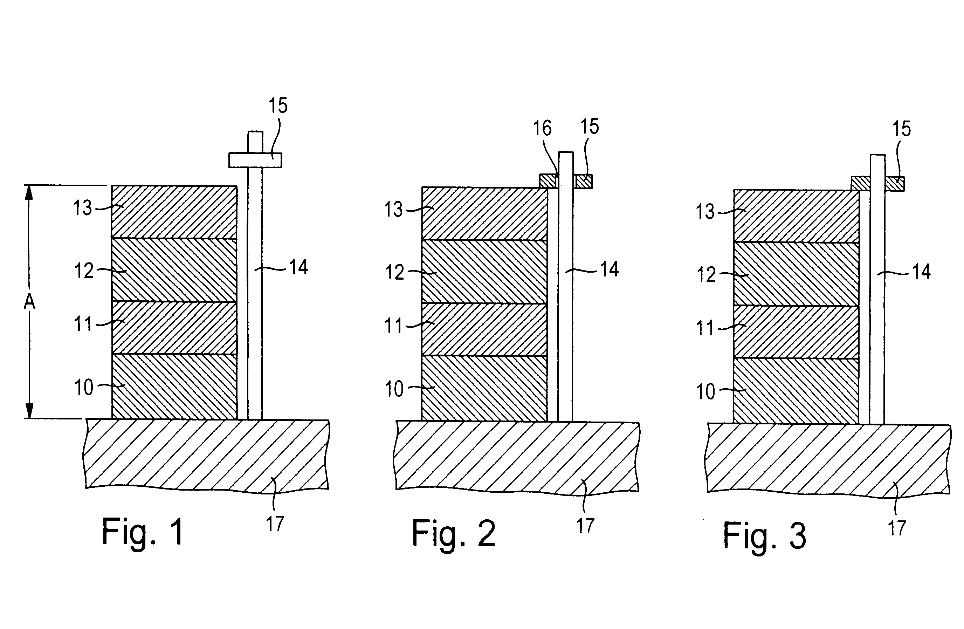

Bei dem in den Figuren 1 bis 3 dargestellten ersten Ausführungsbeispiel sind vier Bauelemente 10 - 13 übereinander angeordnet bzw. aufeinander gestapelt. Ihre Gesamthöhe beträgt A. Insbesondere bei toleranzbehafteten Bauteilen 10 - 13 kann daher die Höhe A unterschiedlich ausfallen. Ein neben den Bauelementen 10 - 13 angeordnetes stabförmiges, als Arbeitsglied oder Halteglied ausgebildetes längenjustierbares mechanisches Bauteil 14 besitzt zur Längenjustierung ein als Justierelement ausgebildetes Ringglied 15 aus Memorymetall, das eine Durchgangsbohrung 16 besitzt, deren Durchmesser zunächst geringfügig kleiner als der Durchmesser des stabförmigen Bauteils 14 ist.

Das Ringglied 15 soll nun in der Höhe A so justiert werden, dass es am obersten Bauteil 14 anliegt, um beispielsweise eine Halte-, Mess-, oder Kontaktfunktion ausüben zu können, je nachdem, ob das Bauteil 14 als Arbeitsglied, Halteglied oder dergleichen ausgebildet ist. Hierzu wird zunächst das Ringglied 15 aus Memorymetall unter die Erweichungstemperatur des Memorymetalls abgekühlt, die materialabhängig beispielsweise bei -20° C liegt. Typische Memorymetalle sind beispielsweise Nickel-Titan-Legierungen, wie Nitinol. Andere Memorymetalle bzw. Memorymetall-Legierungen sind ebenfalls bekannt und können je nach gewünschter temperaturabhängiger Hysterese eingesetzt werden. Nach der Erweichung wird nun die Durchgangsbohrung 16 so aufgeweitet, dass das Ringglied 15 auf das stabförmige Bauteil 14 aufgeschoben werden kann. Durch Schwerkrafteinwirkung gleitet es dann gemäß Figur 2 nach unten, bis es am obersten Bauelement 13 anliegt. Je nach Position oder Orientierung der Anordnung kann anstelle der Schwerkraft auch eine andere Kraft treten, durch die das Ringglied 15 in die gewünschte Position bzw. Justierposition gelangt. Nun wird das Ringglied 15 über die für das jeweilige Memorymetall typische Memory-Temperatur von beispielsweise 80° C erhitzt, bei der der jeweilige Gegenstand aus Memorymetall wieder seine ursprüngliche Gestalt einnimmt. Für das vorliegende Beispiel bedeutet dies, dass das Ringglied 15 wieder zu seiner ursprünglichen Gestalt schrumpft, bei der die Durchgangsbohrung 16 einen geringfügig kleineren Durchmesser als der des stabförmigen Bauteils 14 aufweist. Dadurch wird das Ringglied 15 in der erreichten Position fest am Bauteil 14 fixiert, wie dies in Figur 3 dargestellt ist.

Für die beschriebene Justierung des Ringglieds 15 am Bauteil 14 bzw. die dadurch erfolgte Längenjustierung des Bauteils 14 sind keinerlei Justagewerkzeuge oder sonstigen Justagehilfsmittel erforderlich, so dass eine Justierung auch an unzugänglichen Stellen möglich ist, wobei die Justage in der beschriebenen Weise praktisch automatisch erfolgt und lediglich das Erhitzen durchgeführt werden muss.

Beim beschriebenen Ausführungsbeispiel liegen die Bauelemente 10 - 13 auf einem Untergrund 17 auf, der auch das stabförmige Bauteil 14 trägt, welches beispielsweise daran fixiert sein kann. Alternativ hierzu kann das Bauteil 14 auch den Stapel von Bauelementen 10 - 13 klammerartig umgreifen, wobei dann das Ringglied 15 in der beschriebenen Weise die Klammer schließt.

Das Ringglied 15 besitzt beispielsweise eine zylindrische Gestalt, kann jedoch auch eine ellipsoidförmige, teilellipsoidförmige, kugelförmige oder teilkugelförmige Gestalt aufweisen oder eine Mischgestalt der vorstehend genannten Alternativen.

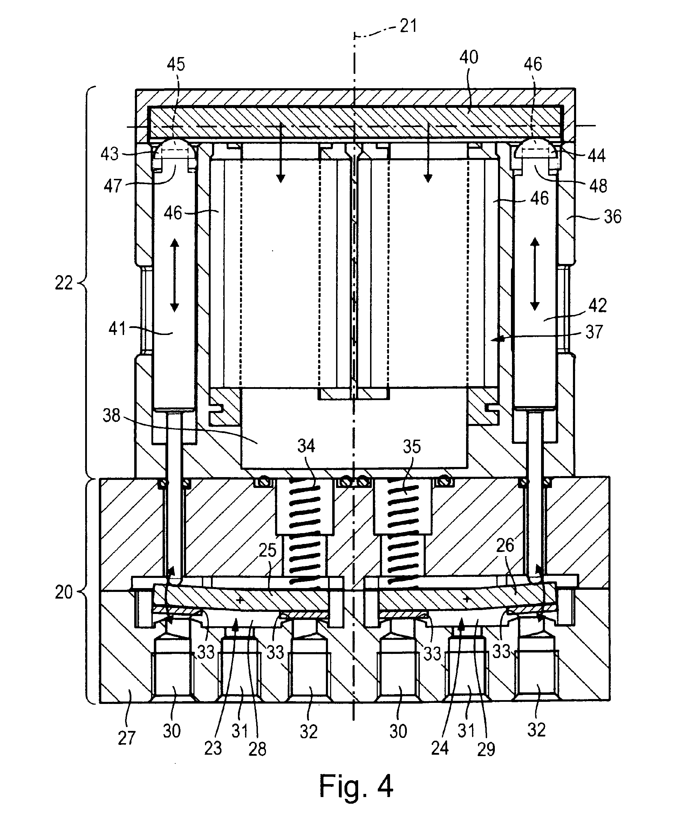

In Figur 4 ist eine als Ventil ausgebildete Montageanordnung im Längsschnitt dargestellt. Es setzt sich aus einem Ventilteil 20 und einem darin in Achsrichtung einer Hauptachse 21 angesetzten elektromagnetischen Betätigungsteil 22 zusammen. Der Ventilteil 20 umfasst zwei Ventileinheiten 23, 24, die jeweils ein zwischen zwei Schaltstellungen umschaltbares Ventilglied 25, 26 aufweisen. In einem Ventilgehäuse 27 des Ventilteils 20 sind zwei zu den beiden Ventileinheiten 23, 24 gehörende erste und zweite Ventilkammern 28, 29 ausgebildet.

Die beiden Ventileinheiten 23, 24 sind zweckmäßigerweise jeweils in der Funktionalität eines 3/2-Wege-Ventils ausgebildet. Dementsprechend münden in jede Ventilkammer 28, 29 drei Ventilkanäle 30 - 32 ein, wobei die Mündungen von jeweils zwei dieser Ventilkanäle 30, 32 von einem Ventilsitz 33 umrahmt sind. Selbstverständlich können die beiden Ventileinheiten 23, 24 jeweils auch als 2/2-Wege-Ventile oder eine andere Art von Wegeventil ausgebildet sein.

Die beiden Ventilglieder 25, 26 sind als Wippenelemente ausgebildet und schwenkbar in der zugeordneten Ventilkammer 28, 29 gelagert. Sie sind durch Federmittel 34, 35 in eine Grundstellung vorgespannt, in der sie in der Ventileinheit 23 den Ventilkanal 32 und in der Ventileinheit 24 den Ventilkanal 30 verschließen.

Das sich rückseitig an das Ventilteil 20 anschließende Betätigungsteil 22 verfügt über ein Betätigungsgehäuse 36 und ist mittels nicht dargestellter Befestigungsmittel am Ventilteil 20 fixiert. Im Inneren des Betätigungsgehäuses 36 ist eine Elektromagneteinheit 37 untergebracht, die einen weichmagnetischen Jochkörper 38 aufweist, der bezüglich des Betätigungsgehäuses 36 ortsfest fixiert und U-förmig gestaltet ist. Auf jedem Jochschenkel des Jochkörpers 38 sitzt eine elektrisch bestrombare Spule 39 zur Erzeugung einer magnetischen Anziehungskraft auf ein den Polflächen des Jochkörpers 38 gegenüberliegendes Ankerelement 40. Dieses Ankerelement 40 erstreckt sich über die Elektromagneteinheit 37 und dabei insbesondere über die Polflächen des Jochkörpers 38 hinweg, wobei es jeweils seitlich über die Elektromagneteinheit 37 hinausragt. Dieses Ankerelement 40 ist in Achsrichtung der Hauptachse 21 beweglich in dem Betätigungsgehäuse 36 gelagert.

Jeweils zwischen einem der Endbereiche des Ankerelements 40 und einem der Ventilglieder 25, 26 erstreckt sich ein Betätigungsstößel 41, 42 als Betätigungsglied, der als längenjustierbares Bauteil ausgebildet ist. Diese beiden Betätigungsstößel 41, 42 sind jeweils seitlich neben der Elektromagneteinheit 37 im Betätigungsgehäuse 36 parallel zu der Hauptachse 21 verschiebbar gelagert und erstrecken sich mit einem Fortsatz durch das Ventilgehäuse 27 bis zum jeweiligen Ventilglied 25, 26. Hierdurch können durch Betätigung der Elektromagneteinheit 37 mittels des Ankerelements 40 über die Betätigungsstößel 41, 42 die Ventilglieder 25, 26 betätigt und gegen die Federkraft der Federmittel 34, 35 in die jeweils andere Schaltstellung bewegt werden.

In Abhängigkeit der Geometrie der gesamten Anordnung seiner Teile bestimmt die Länge der Betätigungsstößel 41, 42 die Position und den Bewegungsablauf der Ventilglieder 25, 26. Die Länge der Betätigungsstößel 41, 42 muss daher sehr exakt eingehalten oder justiert werden. In Folge der Toleranzen der einzelnen Bauteile ist es erforderlich, diese Justierung im eingebauten Zustand vorzunehmen, in dem der Zugriff zu den Betätigungsstößeln 41, 42 nicht oder kaum noch möglich ist. Die Betätigungsstößel 41, 42 besitzen daher jeweils an ihren dem Ankerelement 40 zugewandten Enden ein halbkugelförmiges Ringglied 43, 44 als Justierelement, das aus einem Memorymetall besteht. Diese Ringglieder 43, 44 besitzen jeweils eine Durchgangsbohrung 45, 46, in die jeweils ein im Durchmesser angepasster Endbereich 47, 48 der Betätigungsstößel 41, 42 teilweise eingreift. Wie schon beim ersten Ausführungsbeispiel erläutert, besitzt die Durchgangsbohrung 45, 46 der Ringglieder 43, 44 einen Durchmesser, der zunächst geringfügig geringer als der der Endbereiche 47, 48 der Betätigungsstößel 41, 42 ist. Die Ringglieder 43, 44 werden dann unter die Erweichungstemperatur abgekühlt und im erweichten Zustand so aufgeweitet, dass die über die Endbereiche 47, 48 geschoben werden könnten und entlang diesen verschiebbar sind. Nun wird das gesamte Magnetventil zusammengebaut und im zusammengebauten Zustand so verschwenkt, dass sie die beiden Ringglieder 43, 44 tragenden Endbereiche 47, 48 nach unten weisen. Die Betätigungsstößel 41, 42 werden dabei in der gewünschten Weise bzw. Position an den Ventilgliedern 25, 26 in Anlage gehalten. Die Ringglieder 43, 44 gleiten nun schwerkraftbedingt nach unten bis zur Anlage am Ankerelement 40 oder bis zu einem nicht dargestellten Abstandselement am Ankerelement 40, das z.B. nach der Justierung auch wieder entfernt werden kann. In dieser Position werden sie nun über die Memorytemperatur erhitzt, in der sie bedingt durch die Eigenschaften des Memorymetalls wieder die ursprüngliche Gestalt einnehmen, also auf die Endbereiche 47, 48 der Betätigungsstößel 41, 42 aufgeschrumpft werden. Dieser Zustand bleibt dann erhalten.

Die Gestalt der Ringglieder 43, 44 kann wie schon bei ersten Ausführungsbeispiel variabel gewählt werden und beispielsweise auch zylindrisch, ellipsoidförmig, teilellipsoidförmig, kugelförmig sein oder eine Mischgestalt dieser Alternativen aufweisen. Die Durchgangsborhung als Durchgangsausnehmung kann beispielsweise auch als Sackbohrung ausgebildet sein, wobei eine Verschiebung des jeweiligen Ringglieds bis in die Justierposition gewährleistet sein muss.

In Abweichung des in Figur 4 dargestellten zweiten Ausführungsbeispiels können die Betätigungsstößel 41, 42 selbstverständlich für alle Ventiltypen eingesetzt werden, bei denen eine lineare Kraftübertragung zwischen einer Elektromagneteinheit und einem oder mehrerer Ventilglieder erforderlich ist. Die Ventile können dabei gemäß dem Ausführungsbeispiel zwei Ventilglieder 25, 26 oder nur ein Ventilglied oder eine größere Anzahl von Ventilgliedern aufweisen.

Prinzipiell können die Ringglieder 43, 44 auch an den ventilgliedseitigen Endbereichen der Betätigungsstößel 41, 42 angeordnet sein. In diesem Falle kann die Justierung in der dargestellten Position durch Schwerkrafteinwirkung erfolgen.

In Abwandlung des beschriebenen Ausführungsbeispiels kann auch in umgekehrter Weise das längenjustierbare mechanische Bauteil 14 aus Memorymetall bestehen, während das Ringglied 15 aus einem anderen Metall, wie Stahl oder Edelstahl, besteht. In diesem Falle muss der Durchmesser des stab- oder rohrförmigen Bauteils 14 zunächst so reduziert werden, dass sich das Ringglied 15 darauf verschieben lässt. Dies erfolgt beispielsweise dadurch, dass das Bauteil 14 im erweichten Zustand bei einer Temperatur unter der Erweichungstemperatur, gestreckt wird, wobei sich sein Durchmesser reduziert. Dies kann beispielsweise bei langen Stäben erfolgen, die dann in der gewünschten Weise abgelängt werden. Je nach Anwendung kann dann noch eine mechanische Nachbearbeitung, insbesondere der Endbereiche, erfolgen. Nach der Positionierung des Ringglieds 15 in der beschriebenen Weise erfolgt dann, ebenfalls wie beschrieben, die Fixierung durch Erhitzen über die Memory-Temperatur.

Zur Materialeinsparung des zum Teil teuren Memorymetalls kann auch nur ein Bereich des Bauteils 14 aus Memorymetall bestehen, und zwar derjenige Bereich, auf dem das Ringglied 15 justiert werden soll. Beispielsweise kann ein kurzes stabförmiges Element als Teilelement des Bauteils 14 im durchmesserreduzierten Zustand in eine Stirnbohrung des übrigen Bauteils 14 eingesetzt und durch Erhitzen oder auf andere Weise fixiert werden. Auf diesem Teilbereich bzw. Teilelement wird dann das Ringglied 15 justiert und durch Erhitzen fixiert. Dies kann gleichzeitig oder nacheinander erfolgen.

Die Erfindung ist auch nicht auf die Anwendung bei Ventilen beschränkt, sondern kann überall dort eingesetzt werden, wo Halteglieder oder Arbeitsglieder, wie Stößel in Maschinen oder technischen Geräten eingesetzt werden, deren Länge justiert werden muss.

## Patentansprüche

1. Montageanordnung mit wenigstens einem rohr- oder stabförmigen Element, das von einem Ringglied (15; 43, 44) umgriffen wird, wobei das Ringglied (15; 43, 44) oder wenigstens ein Bereich des rohr- oder stabförmigen Elements aus Memorymetall besteht und entweder das Ringglied (15; 43, 44) auf dem durch Streckung im Durchmesser verringerten Bereich des rohr- oder stabförmigen Elements aus Memorymetall verschiebbar ist oder das aus Memorymetall bestehende Ringglied (15; 43, 44) im aufgeweiteten Zustand auf dem rohr- oder stabförmigen Element verschiebbar ist, und wobei das Ringglied (15; 43, 44) auf dem rohr- oder stabförmigen Element oder dessen Bereich aus Memorymetall durch Erhitzung in der gewünschten Position fixierbar ist, **dadurch gekennzeichnet, dass** das wenigstens eine stabförmige Element ein längenjustierbares, als Arbeitsglied oder Halteglied ausgebildetes mechanisches Bauteil (14; 41, 42) ist und das Ringglied (15; 43, 44) als Justierelement ausgebildet ist und eine Ausnehmung (16; 45, 46) zur Aufnahme eines Teilbereichs (47, 48) des Bauteils (14; 41, 42) besitzt.

2. Montageanordnung nach Anspruch 1, **dadurch gekennzeichnet, dass** die justierbare Länge der Abstand zwischen einem Endbereich des Bauteils (14; 41, 42) einerseits und den benachbarten oder davon entfernten Endbereich des Ringglieds (15; 43, 44) andererseits ist.

3. Montageanordnung nach Anspruch 1 oder 2, **dadurch gekennzeichnet, dass** das Ringglied (15; 43, 44) eine zylindrische, ellipsoidförmige, teilellipsoidförmige, kugelförmige oder teilkugelförmige Gestalt oder Mischgestalt der vorstehend genannten Alternativen besitzt.

4. Montageanordnung in Gestalt eines fluidischen Ventils nach einem der vorhergehenden Ansprüche, **dadurch gekennzeichnet, dass** das Bauteil (41, 42) als Betätigungsglied für ein Ventilglied (25, 26) ausgebildet ist.

5. Montageanordnung nach Anspruch 4, **dadurch gekennzeichnet, dass** sich das als Betätigungsglied ausgebildete Bauteil (41, 42) zwischen einem Aktorglied (40) einer elektrischen oder fluidischen Betätigungseinrichtung (37) und dem Ventilglied (25, 26) erstreckt.

6. Montageanordnung nach Anspruch 5, **dadurch gekennzeichnet, dass** die elektrische Betätigungseinrichtung als elektromagnetische Betätigungseinrichtung ausgebildet ist und das als Betätigungsglied ausgebildete Bauteil (41, 42) zwischen einem Anker als Aktorglied (40) der Betätigungseinrichtung (37) und dem Ventilglied (25, 26) angeordnet ist.

7. Montageanordnung nach Anspruch 5 oder 6, **dadurch gekennzeichnet, dass** das als Betätigungsglied ausgebildete Bauteil (41, 42) nur in einen Teilbereich der insbesondere als Durchgangsausnehmung ausgebildeten Ausnehmung (45, 46) des Ringglieds (43, 44) eingreift oder durch diese hindurchgreift und sich wenigstens teilweise in eine Ausnehmung des Aktorglieds (40) oder Ventilglieds (25, 26) hinein erstreckt.

8. Verfahren zur Herstellung der justierten Montageanordnung nach einem der vorhergehenden Ansprüche, **dadurch gekennzeichnet, dass** zur Verschiebung des Ringglieds (15;43,44) auf dem längenjustierbaren Bauteil (14; 41, 42) entweder das aus Memorymetall bestehende Ringglied (15;43,44) aufgeweitet wird oder wenigstens ein aus Memorymetall bestehender Bereich des Bauteils (14; 41, 42) durch Streckung im Durchmesser verringert wird, dass das mit dem verschiebbaren Ringglied (15;43,44) versehene längenjustierbaren Bauteil (14; 41, 42) in der Montageanordnung so zwischen oder an beiden voneinander beabstandeten Einstellpositionen eingesetzt wird, dass ein Endbereich des Bauteils (14; 41, 42) an der ersten der beiden Einstellpositionen anliegt oder daran fixiert ist, dass die Montageanordnung dann so ausgerichtet wird, dass sich das Ringglied (15; 43, 44) durch Schwerkrafteinwirkung bis zur Anlage an die zweite Einstellposition verschiebt, und dass das Ringglied (15; 43, 44) dann durch Erwärmung an der zweiten Einstellposition fixiert wird.

9. Verfahren nach Anspruch 8, **dadurch gekennzeichnet, dass** das Ringglied (15; 43, 44) aus Memorymetall oder das Bauteil (14; 41, 42) aus Memorymetall unter die Erweichungstemperatur des Memorymetalls abgekühlt und dann mechanisch so aufgeweitet bzw. im Durchmesser verringert wird, dass der Durchmesser der Ausnehmung (16; 45, 46) im Ringglied (15; 43, 44) geringfügig größer als der Durchmesser des Bauteils (14; 41, 42) im Bereich der Position des Ringglieds (15; 43, 44) ist.

10. Verfahren nach Anspruch 8 oder 9, **dadurch gekennzeichnet, dass** das als Betätigungsglied für ein fluidisches Ventil als Montageanordnung ausgebildete längenjustierbare Bauteil (41, 42) in dem Ventil zwischen einem Aktorglied (40) einer elektrischen oder fluidischen Betätigungseinrichtung (37) und einem Ventilglied (25, 26) angeordnet wird.
